(19) **Europäisches Patentamt / European Patent Office / Office européen des brevets**

(11) **EP 4 699 985 A1**

(12) **EUROPEAN PATENT APPLICATION**
published in accordance with Art. 153(4) EPC

(43) Date of publication:
**25.02.2026 Bulletin 2026/09**

(21) Application number: **24792537.3**

(22) Date of filing: **05.04.2024**

(51) International Patent Classification (IPC):
**C01G 53/00** (2025.01)   **H01M 4/505** (2010.01)
**H01M 4/525** (2010.01)

(52) Cooperative Patent Classification (CPC):
**Y02E 60/10**

(86) International application number:
**PCT/JP2024/014185**

(87) International publication number:
**WO 2024/219262 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 JP 2023067067**

(71) Applicant: **Sumitomo Metal Mining Co., Ltd. Tokyo 105-8716 (JP)**

(72) Inventor: **HANAFUSA, Tatsuya Niihama-shi, Ehime 792-8521 (JP)**

(74) Representative: **Vossius & Partner Patentanwälte Rechtsanwälte mbB Siebertstrasse 3 81675 München (DE)**

(54) **METHOD FOR PRODUCING LITHIUM METAL COMPOSITE OXIDE**

(57)   A method for producing a lithium metal composite oxide that includes a step of calcining an object to be treated using a calcining apparatus to obtain a fired product, wherein the calcining apparatus includes an input section into which the object to be treated is introduced, a transport section for transporting the object to be treated that has been introduced from the input section, a cylindrical kiln main body, a discharge port through which the fired product is discharged, and a gas supply device, and in the above step, a low-dew point gas having a dew point of 10°C or lower is supplied from a position upstream from the heating device, an oxygen-containing gas is supplied from a position downstream from the heating device, and a value represented by formula (A) shown below is at least 0.0001 Nm$^3$/kg but not more than 0.30 Nm$^3$/kg.

Supply amount of low-dew point gas (Nm$^3$/hour) / supply amount of object to be treated (kg/hour)      Formula (A):

FIG. 1

**Description**

[Technical Field]

The present invention relates to a method for producing a lithium metal composite oxide.
Priority is claimed on Japanese Patent Application No. 2023-067067, filed April 17, 2023, the content of which is incorporated herein by reference.

[Background Art]

Methods for producing lithium metal composite oxides, which are used as the cathode active material for lithium secondary batteries, include a step of mixing a precursor metal composite compound and a lithium compound, and then calcining the thus obtained mixture. This type of calcining step is conducted using a continuous calcining furnace such as a tunnel furnace or roller hearth kiln, or a flow-type calcining furnace such as a rotary kiln.
Patent Document 1 discloses a method for producing a cathode active material using a calcining furnace provided with a dual air supply system with the aim of accelerating the calcining reaction.

[Citation List]

[Patent Document]

[Patent Document 1] JP-A-2019-75253

[Summary of Invention]

[Technical Problem]

Flow-type calcining furnaces have a problem in that producing lithium metal composite oxides in a stable manner tends to be difficult.
The present invention has an object of providing a method for producing a lithium metal composite oxide that enables stable production.

[Solution to Problem]

The present invention includes the following [1] to [7].

[1] A method for producing a lithium metal composite oxide that includes a step of calcining an object to be treated using a calcining apparatus to obtain a fired product, wherein the object to be treated contains a mixture of a metal composite compound and a lithium compound, the calcining apparatus includes an input section into which the object to be treated is introduced, a transport section for transporting the object to be treated that has been introduced from the input section, a cylindrical kiln main body, a discharge port through which the fired product is discharged, and a gas supply device, the kiln main body includes a heating device, and in the above step, a low-dew point gas having a dew point of 10°C or lower is supplied from a position upstream from the heating device, an oxygen-containing gas is supplied from a position downstream from the heating device, the object to be treated is fired under counterflow contact with the oxygen-containing gas, and a value represented by formula (A) shown below is at least 0.0001 $Nm^3/kg$ but not more than 0.30 $Nm^3/kg$.

Supply amount of low-dew point gas ($Nm^3/hour$) / supply amount of object to be treated (kg/hour)     Formula (A):

[2] The method for producing a lithium metal composite oxide according to [1], wherein the calcining apparatus is a rotary kiln.
[3] The method for producing a lithium metal composite oxide according to [1] or [2], wherein the proportion of Li contained in the lithium compound is at least 5% by mass but not more than 50% by mass.
[4] The method for producing a lithium metal composite oxide according to [3], wherein the proportion of Li is at least 5% by mass but not more than 30% by mass.
[5] The method for producing a lithium metal composite oxide according to any one of [1] to [4], wherein a value represented by formula (C) shown below is at least 0.3 $Nm^3/kg$ but not more than 1 $Nm^3/kg$.

Supply amount of oxygen-containing gas (Nm³/hour) / supply amount of object to be treated (kg/hour)　　　　　Formula (C):

[6] The method for producing a lithium metal composite oxide according to any one of [1] to [5], wherein the calcining apparatus includes an exhaust port upstream from the heating device, and in the step described above, calcining is conducted while the oxygen-containing gas inside the calcining apparatus is exhausted from the exhaust port.

[7] The method for producing a lithium metal composite oxide according to any one of [1] to [6], wherein the lithium metal composite oxide is represented by a compositional formula (I) shown below.

$$Li[Li_a(Ni_{(1-x-y)}Co_xM1_y)_{1-a}]O_2 \dots \qquad \text{compositional formula (I)}$$

(In the compositional formula (I), M1 represents at least one element selected from the group consisting of Mn, Fe, Cu, Ti, Mg, Ca, Al, Zn, Sn, Zr, W, Nb, B, Si, S and P, and the compositional formula (I) satisfies $-0.1 \leq a \leq 0.2$, $0 \leq x \leq 0.7$, $0 < y \leq 0.7$, and $x+y < 1$.)

[Advantageous Effects of Invention]

The present invention is able to provide a method for producing a lithium metal composite oxide that enables stable production.

[Brief Description of Drawings]

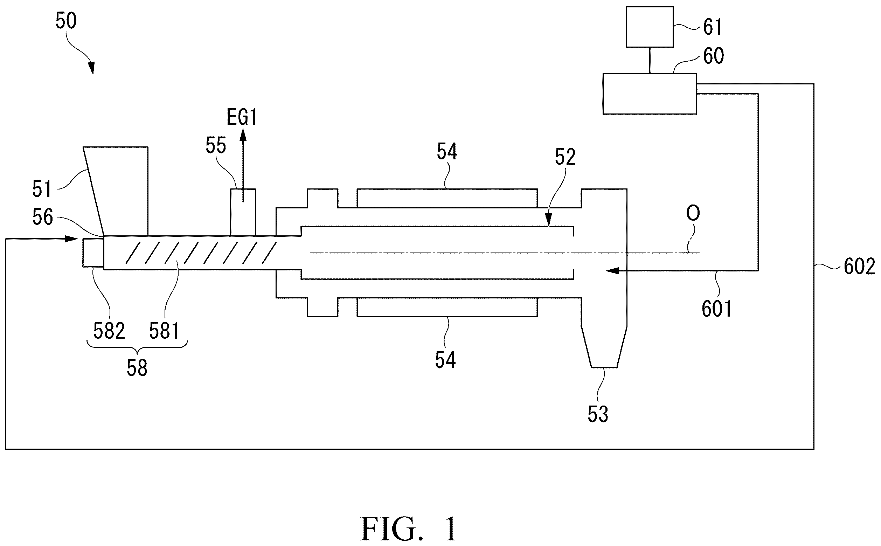

FIG. 1 is a schematic view of a cross-section of a calcining apparatus used in the method for producing a lithium composite metal oxide according to one embodiment of the present invention.

[Description of Embodiments]

In this description, a metal composite compound may also be abbreviated as "MCC", a lithium metal composite oxide may be abbreviated as "LiMO", and a cathode active material for a lithium secondary battery may be abbreviated as "CAM".

The term "Ni" indicates not standalone nickel metal, but rather a Ni atom. Similarly, "Co" and "Li" and the like indicate a cobalt atom and a lithium atom respectively.

A numerical range described, for example, as "1-10 $\mu$m" or "1 to 10 $\mu$m" means a numerical range from 1 $\mu$m to 10 $\mu$m, including the lower limit value of 1 $\mu$m and the upper limit value of 10 $\mu$m.

For numerical ranges in this description, the lower limit value and upper limit value may be combined as appropriate.

Numerical ranges for the various physical properties, compositions, and production conditions may also be combined as appropriate.

<Method for Producing LiMO>

One embodiment of the present invention relates to a method for producing a LiMO that includes a step of calcining an object to be treated using a calcining apparatus to obtain a fired product (hereinafter sometimes referred to as "step A"). The calcining apparatus includes an input section into which the object to be treated is introduced, a transport section for transporting the object to be treated that has been introduced from the input section, a cylindrical kiln main body, a discharge port through which the fired product is discharged, and a gas supply device, and the kiln main body is equipped with a heating device.

In the step A, a low-dew point gas having a dew point of 10°C or lower is supplied from a position upstream from the heating device. This enables dehumidification and drying of water vapor present in the vicinity of the supply section for the object to be treated. As a result, dew condensation water is less likely to form, blockages in the vicinity of the supply section can be avoided, and stable LiMO production becomes possible. The expression "upstream from the heating device" means a position on the input section side of the heating device. For example, the low-dew point gas can be supplied from a low dew-point gas supply section 56 described below.

The calcining apparatus used in the above method for producing a LiMO is described below with reference to FIG. 1.

<<Overall Configuration>>

FIG. 1 is a schematic cross-sectional view of the calcining apparatus used in the method for producing a LiMO according to this embodiment of the present invention.

The calcining apparatus 50 illustrated in FIG. 1 includes an input section 51, a transport section 58, a kiln main body 52, a discharge port 53, and a gas supply device 60. The transport section 58 is equipped with a transport mechanism 581 and an electric motor 582.

The object to be treated is introduced at the input section 51 and supplied to the transport section 58, and is then transported into the interior of the kiln main body 52 by the transport mechanism 581 of the transport section 58.

The transport section 58 is, for example, a screw-type system. The transport mechanism 581 is, for example, a transport screw.

The kiln main body 52 is the facility in which the object to be treated is fired. The object to be treated that has been transported to the kiln main body 52 is fired, and the resulting fired product is discharged from the discharge port 53.

As outlined above, the object to be treated passes through the input section 51, the transport section 58 and the kiln main body 52, moves in the direction of the discharge port 53 while undergoing heating inside the kiln main body 52, and is finally discharged from the discharge port 53.

The kiln main body 52 is cylindrical, and more specifically circular cylindrical, and can be rotated about a central axis O that acts as the rotational axis. The kiln main body 52 is provided with a heating device 54. The object to be treated supplied to the inside of the kiln main body 52 is heated using this heating device 54.

The calcining apparatus 50 also includes a gas supply device 60. The gas supply device 60 is provided with an oxygen-containing gas supply section 601 for supplying an oxygen-containing gas to the interior of the kiln main body 52 at a position downstream from the heating device 54. The expression "downstream from the heating device 54" means a position on the discharge port 53 side of the heating device 54.

The calcining apparatus 50 is provided with an exhaust port 55 upstream from the heating device 54, so that the oxygen-containing gas flows through the inside of the kiln main body 52 in the opposite direction to the movement of the object to be treated, and during the step A, the calcining is preferably conducted while the oxygen-containing gas inside the calcining apparatus 50 is exhausted from the exhaust port 55 (EG1 in FIG. 1).

When the object to be treated undergoes calcining inside the kiln main body 52, the reactions that occur during calcining may sometimes generate water. Examples of reactions that generate water include dehydration reactions of lithium hydroxide or the MCC, and water molecule elimination reactions that occur during reaction of the lithium compound and the MCC. The generated water is converted to water vapor and travels on the counterflow gas stream in the direction of the transport section 58. Water vapor that reaches the upstream side of the heating device 54 condenses as the temperature falls.

When the dew condensation water generated by condensation contacts the raw material supplied to the transport section 58, clumping of the raw material may occur, blocking the transport section 58. As a result, subsequent supply of the raw material is inhibited, making stable production of LiMO problematic.

One possible method to address this problem involves increasing the rate of rotation of the electric motor 582 of the transport section 58 to enable a constant rate of supply for the raw material, but if long-term operation is considered, then resolving these types of blockages is difficult.

In this embodiment of the present invention, by supplying a low-dew point gas at a position where condensation is likely to occur, namely upstream from the heating device 54, any water vapor in the vicinity of the supply section for the object to be treated can be dehumidified and dried. As a result, blockages of the transport section 58 can be avoided, the raw material can be supplied stably, and the LiMO can be produced in a stable manner.

Specifically, the gas supply device 60 is provided with a low-dew point gas supply line 602 separate from the oxygen-containing gas supply section 601.

The rates of supply of the oxygen-containing gas and the low-dew point gas are controlled by a control section 61.

In this description, the term "low-dew point gas" describes a gas having a dew point of 10°C or lower, and refers specifically to oxygen, nitrogen or air having a dew point of 10°C or lower, or a mixed gas containing two or more of these three gases.

Further, the "oxygen-containing gas" is a gas that contains oxygen, and examples include oxygen and mixed gases of oxygen and nitrogen.

The dew point of the low-dew point gas is preferably -10°C or lower, and more preferably -20°C or lower. By using a low-dew point gas with a dew point that satisfies the above range, the LiMO can be produced in an even more stable manner.

The low-dew point gas is supplied to the low dew-point gas supply section 56. In FIG. 1, the low dew-point gas supply section 56 is installed in the upper portion of the electric motor 582. However, the location of the low dew-point gas supply section 56 is not particularly restricted, provided it is on the upstream side of the heating device 54. For example, the low dew-point gas supply section 56 may be installed in the circumferential direction of the kiln main body 52 in a position on the upstream side of the heating device 54, or may be installed in the central upper portion of the transport mechanism 581. Further, the low dew-point gas supply section may also be installed in two or more locations.

The calcining apparatus is preferably a rotary kiln that functions as a flow-type calcining furnace. In a rotary kiln, the kiln main body rotates while sliding across a fixed section of the kiln. Gaps are prone to occurring within the sliding section, and therefore a sealing gas supply section is generally provided, mainly for the purpose of sealing the sliding section. The sealing gas supply section is installed in the vicinity of the sliding section, and is typically installed on the upstream side and/or downstream side of the kiln main body heating device.

As mentioned above, rotary kilns are generally provided with a sealing gas supply section, and therefore by simply replacing the sealing gas with a low-dew point gas, the production method of the present invention can be realized without requiring any improvements to the calcining apparatus.

Besides a rotary kiln, an oscillating-type cylindrical furnace provided with a low-dew point gas supply section and supply device may also be used as the calcining apparatus.

Because the gases typically used as the sealing gas are gases having a dew point exceeding 10°C, the low-dew point gas introduced in an embodiment of the present invention differs from a sealing gas.

By using the sealing gas supply section installed upstream from the kiln main body heating device as the low-dew point gas supply section, the low-dew point gas can be supplied from the upstream side of the heating device.

Next is a description of the step A using the calcining apparatus 50 described above.

The object to be treated is supplied from the input section 51 while the kiln main body 52 is rotated.

In the step A of moving the object to be treated from the input section 51 along the direction of the kiln main body 52 with the transport section 58 while continuously calcining the object to be treated, the calcining apparatus 50 supplies the low-dew point gas from the upstream side of the heating device 54 while supplying the oxygen-containing gas from the downstream side of the heating device 54.

The step A is conducted under conditions in which the value represented by formula (A) shown below is within a range from 0.0001 to 0.30 $Nm^3/kg$.

Supply amount of low-dew point gas ($Nm^3$/hour) / supply amount of object to be treated (kg/hour)      Formula (A):

The value represented by formula (A) is preferably at least 0.06 $Nm^3/kg$, more preferably at least 0.065 $Nm^3/kg$, and even more preferably greater than 0.07 $Nm^3/kg$. The value represented by formula (A) is preferably not more than 0.25 $Nm^3/kg$, and more preferably 0.22 $Nm^3/kg$ or less. The value represented by formula (A) is, for example, within a range from 0.06 to 0.25 $Nm^3/kg$, from 0.065 to 0.22 $Nm^3/kg$, or greater than 0.07 $Nm^3/kg$ but not more than 0.22 $Nm^3/kg$.

Provided the value represented by formula (A) is at least as large as the above lower limit, a sufficient amount of the low-dew point gas is supplied to dehumidify and dry the water vapor reaching the vicinity of the supply section for the object to be treated, and therefore condensation is unlikely to occur in the vicinity of the supply section for the object to be treated, and the raw material can be supplied in a stable manner.

Provided the value represented by formula (A) is not more than the above upper limit, the amount of oxygen-containing gas from the oxygen-containing gas supply section 601 is unlikely to become excessive, and the heating energy required for the heating device 54 is less likely to increase.

In the step A, calcining is conducted with the oxygen-containing gas in counterflow contact with the object to be treated. The amount supplied of the oxygen-containing gas preferably satisfies formula (X) shown below.

Formula (X): Supply amount of low-dew point gas ($Nm^3$/hour) < supply amount of oxygen-containing gas ($Nm^3$/hour)      Formula (X);

Calcining is conducted while the oxygen-containing gas inside the calcining apparatus 50 is exhausted from the exhaust port 55, and therefore calcining can be conducted under conditions in which the oxygen-containing gas flows through the inside of the kiln main body 52 in the opposite direction to the movement direction of the object to be treated.

Under conditions satisfying formula (X), gas containing water vapor can be exhausted through the exhaust port 55 from the inside of the calcining apparatus 50 containing the transport section 58 in a short period of time (EG1 in FIG. 1). Accordingly, the residence time of the gas containing water vapor inside the calcining apparatus 50 can be shortened, and water vapor is unlikely to be retained in the vicinity of the supply section for the object to be treated.

As a result, blockages of the transport section 58 can be avoided, the raw material can be supplied stably, and the LiMO can be produced in a stable manner.

In the step A, the object to be treated preferably undergoes calcining while the oxygen-containing gas is supplied to the inside of the kiln main body 52 under conditions that yield a value represented by formula (C) shown below within a range from 0.3 to 1 $Nm^3/kg$.

Supply amount of oxygen-containing gas (Nm³/hour) / supply amount of object to be treated (kg/hour)    Formula (C):

The value represented by the above formula (C) is preferably within a range from 0.4 to 1 Nm³/kg, and more preferably from 0.5 to 1 Nm³/kg.

Provided the value represented by formula (C) is at least as high as the above lower limit, the dew point of the oxygen-containing gas inside the kiln main body 52 rises and condensation is less likely to occur, meaning the LiMO can be produced in a stable manner.

Provided the value represented by formula (C) is not more than the above upper limit, any increase in the supply amount of the oxygen-containing gas that requires heating, causing an increase in the heating energy, can be suppressed, enabling the LiMO to be produced in a stable manner.

In the step A, the supply amount of the oxygen-containing gas is preferably at least 0.5 Nm³/hour.

Provided the supply amount of the oxygen-containing gas is at least as high as the above lower limit, the reaction between the object to be treated and the oxygen-containing gas can be satisfactorily enhanced. The upper limit for the supply amount of the oxygen-containing gas is, for example, 2 Nm³/hour. The supply amount of the oxygen-containing gas is more preferably within a range from 0.5 to 2 Nm³/hour.

The calcining temperature for the object to be treated is, for example, within a range from 650 to 900°C, and is preferably from 660 to 850°C, and more preferably from 670 to 800°C. Provided the calcining temperature is at least 650°C, the growth of LiMO particles can be promoted, and a LiMO having a strong crystal structure can be obtained. Further, provided the heating temperature is not more than 900°C, crack formation in the particles of the LiMO can be prevented, the strength of the LiMO can be maintained, and volatilization of lithium ions from the surfaces of the particles contained in the LiMO can be reduced.

In this description, the calcining temperature means the maximum temperature of the atmosphere inside the kiln main body 52.

The retention time during calcining is preferably within a range from 1 to 50 hours. Provided the retention time during calcining is at least one hour, crystal development is favorable. Provided the retention time during calcining is no longer than 50 hours, volatilization of lithium ions is less likely.

In this description, the retention time during calcining is defined as the time from when the object to be treated reaches the region in which the heating device 54 is provided until the object to be treated reaches the end of the region in which the heating device 54 is provided.

The internal diameter of the kiln main body 52 is preferably within a range from 0.05 to 10 m, more preferably from 0.07 to 5 m, and even more preferably from 0.09 to 2 m.

The fill factor of the object to be treated in the kiln main body 52 is preferably within a range from 1 to 20%, more preferably from 2 to 17%, and even more preferably from 3 to 15%.

The rotational rate of the kiln main body 52 in the step A is preferably within a range from 0.003 to 0.5 rad/sec, more preferably from 0.05 to 0.4 rad/sec, and even more preferably from 0.08 to 0.3 rad/sec.

(Object to be Treated)

The object to be treated contains a mixture of a MCC and a lithium compound.

A "mixture of a MCC and a lithium compound" is a mixture prepared by mixing the MCC and the lithium compound without conducting calcining. The object to be treated may also contain other materials, provided it contains mainly the above mixture. For example, in addition to the mixture, the object to be treated may also contain reaction products of the MCC and the lithium compound. Reaction products of the MCC and the lithium compound are substances obtained by calcining of the MCC and the lithium compound.

A MCC is a compound which can be used to produce a LiMO by conducting calcining together with a lithium compound. Examples of the MCC include metal composite oxides and metal composite hydroxides.

The proportion of Li within the lithium compound is preferably at least 5% by mass, more preferably at least 10% by mass, and even more preferably 15% by mass or greater. The proportion of Li within the lithium compound is preferably not more than 50% by mass, more preferably not more than 30% by mass, even more preferably not more than 25% by mass, and particularly preferably 20% by mass or less. The proportion of Li within the lithium compound is, for example, within a range from 5 to 50% by mass, from 5 to 30% by mass, from 10 to 25% by mass, or from 15 to 20% by mass.

Specific examples of compounds that may be used as the lithium compound include at least one compound selected from among lithium carbonate (Li proportion: 19% by mass), lithium nitrate (Li proportion: 5 to 10% by mass), lithium acetate (Li proportion: 7 to 11 % by mass), lithium hydroxide (Li proportion: 16 to 30% by mass), lithium oxide (Li proportion: 46% by mass), lithium chloride (Li proportion: 16% by mass), and lithium fluoride (Li proportion: 27% by mass). Among these compounds, in terms of exhibiting superior reactivity with the MCC, lithium hydroxide (Li proportion: 16 to 30% by mass) is preferred.

Lithium hydroxide is prone to water vapor generation during calcining. However, by using the method for producing a LiMO described above, the LiMO can be produced in a stable manner even when lithium hydroxide is used as the lithium compound.

Mixtures of a MCC and a lithium compound contain large amounts of water of adhesion and water of crystallization, and therefore are prone to water vapor generation. However, by using the method for producing a LiMO described above, the LiMO can be produced in a stable manner even when a mixture of a MCC and a lithium compound is used.

Compositional analysis of the lithium compound can be performed, for example, by dissolving the lithium compound in hydrochloric acid, and then conducting measurements using an ICP emission spectrophotometer (Optima 7300, manufactured by PerkinElmer, Inc.).

The MCC preferably contains Ni and an element M1, and more preferably contains, Ni, Co and an element M1. The element M1 represents one or more elements selected from the group consisting of Mn, Fe, Cu, Ti, Mg, Ca, Al, Zn, Sn, Zr, W, Nb, B, Si, S and P.

The MCC may be, for example, a metal composite hydroxide or metal composite oxide containing Ni, Co and Al.

In those cases where the MCC is a metal composite hydroxide, the metal composite hydroxide can be produced, for example, using the continuous coprecipitation method disclosed in JP-A-2002-201028. For example, production may be conducted using the following procedure. First, in a reaction vessel at a temperature of 20 to 80°C, an alkaline aqueous solution is added to a mixed liquid containing a metal salt solution and a complexing agent to achieve a pH within a range from 9 to 13. Subsequently, the resulting reaction precipitate is washed, dewatered and dried to obtain the metal composite hydroxide. Examples of the metal salt solution include a nickel sulfate aqueous solution, a cobalt sulfate aqueous solution, and an aluminum sulfate aqueous solution, whereas examples of the complexing agent include ammonium sulfate and the like. A sodium hydroxide aqueous solution or potassium hydroxide aqueous solution can be used as the alkaline aqueous solution.

In those cases where the MCC is a metal composite oxide, the metal composite oxide can be produced by heating the metal composite hydroxide at a temperature within a range from 300 to 700°C.

The lithium compound and the MCC are mixed with due consideration of the compositional ratio of the final target product to obtain a mixture. Specifically, the amount (molar ratio) of Li relative to a value of 1 representing the total amount of elements other than Li and oxygen in the MCC (for example, Ni, Co, and the element M1) is preferably at least 0.98, more preferably at least 1.04, and even more preferably 1.05 or greater. This amount of Li is preferably not more than 1.20. The amount of Li may be, for example, within a range from 0.98 to 1.20, from 1.04 to 1.20, or from 1.05 to 1.20.

Following the above step A, a main calcining may be conducted. In such cases, the calcining in the step A is termed a preliminary calcining, and the fired product obtained in the step A is termed the preliminary fired product. Subjecting the preliminary calcining product to main calcining yields the main calcining product. There are no particular limitations on the calcining apparatus used in the main calcining, and either a continuous static calcining furnace, or a flow-type calcining furnace may be used. The calcining apparatus 50 may be used as the flow-type calcining furnace. The temperature and time period during the main calcining are for example, from 650 to 950°C and from 3 to 50 hours respectively.

The fired product may be washed, dewatered and dried as necessary. Completing the steps described above yields the LiMO.

[Method for Measuring Coefficient of Variation for Stirring Impeller Frequency]

Ascertaining whether or not a LiMO production method capable of stable production has been achieved is evaluated by measuring the coefficient of variation for the stirring impeller frequency.

In the calcining apparatus 50, the stirring impeller is rotationally driven by the electric motor 582, thereby transporting the object to be treated that has been introduced from the input section 51.

If the desired raw material supply rate (kg/h) can be maintained with no change or almost no change in the frequency of the stirring impeller, then this means stable production has been achieved. In those cases where the frequency during operation must be adjusted in order to maintain the desired raw material supply rate, the degree of variation in the frequency is calculated as the "coefficient of variation for the stirring impeller frequency".

Specifically, this coefficient of variation for the stirring impeller frequency is calculated using the following formula.

Coefficient of variation for the stirring impeller frequency = standard deviation in the frequency of the stirring impeller of the transport mechanism 581 / average value of the frequency of the stirring impeller of the transport mechanism 581

In the calculation of the coefficient of variation for the stirring impeller frequency, the standard deviation in the frequency following accumulation of the object to be treated inside the kiln main body 52 is used.

A larger value for the above coefficient of variation indicates frequent adjustments of the frequency during operation in order to maintain the desired raw material supply rate, meaning the production is unstable.

In this description, provided the value of the above coefficient of variation is 0.035 or less, the risk of blockages occurring during long-term operation is low, and the method may be evaluated as "enabling stable production".

<LiMO>

The LiMO mentioned above has the following characteristics.

The LiMO preferably contains Li, Ni, and the above element M1, and more preferably contains, Li, Ni, Co, and the element M1. The LiMO is represented, for example, by compositional formula (I) shown below.

$$Li[Li_a(Ni_{(1-x-y)}Co_xM1_y)_{1-a}]O_2 \ ... \qquad \text{compositional formula (I)}$$

(In the compositional formula (I), M1 represents the element M1 described above, and the compositional formula (I) satisfies $-0.1 \leq a \leq 0.2$, $0 \leq x \leq 0.7$, $0 < y \leq 0.7$, and $x+y < 1$.)

From the viewpoint of obtaining a lithium secondary battery having a superior cycle retention rate, the value of a in the above compositional formula (I) is more preferably -0.05 or greater, and even more preferably -0.01 or greater. Further, from the viewpoint of obtaining a lithium secondary battery having a higher initial coulombic efficiency, a is preferably not more than 0.08, and more preferably 0.05 or less.

The upper limit and lower limit values for a may be combined as appropriate. For example, a may be within a range from -0.01 to 0.2, from -0.05 to 0.08, or from -0.01 to 0.05.

From the viewpoint of improving the cycle characteristics, the value of x is preferably at least 0.01, and more preferably 0.02 or greater. From the viewpoint of obtaining a lithium secondary battery having a high charging capacity, x is preferably not more than 0.5, and more preferably 0.3 or less.

For example, x may be within a range from 0.01 to 0.5, or from 0.02 to 0.3.

From the viewpoint of improving the cycle characteristics, the value of y is preferably at least 0.01, and more preferably 0.02 or greater. From the viewpoint of obtaining a lithium secondary battery having a high charging capacity, y is preferably not more than 0.5, and more preferably 0.3 or less.

For example, y may be within a range from 0.01 to 0.5, or from 0.02 to 0.3.

The value of x+y is greater than 0 but less than 1, preferably greater than 0 but not more than 0.7, more preferably greater than 0 but not more than 0.3, and even more preferably greater than 0 but not more than 0.25.

From the viewpoint of obtaining a lithium secondary battery having a superior cycle retention rate, M1 is preferably at least one element selected from the group consisting of Mn, Ti, Mg, Al, W, Nb, B and Zr, and is more preferably at least one element selected from the group consisting of Mn, Al, W, Nb, B and Zr.

Compositional analysis of the LiMO can be performed, for example, by dissolving the LiMO in hydrochloric acid, and then conducting measurements using an ICP emission spectrophotometer (Optima 7300, manufactured by PerkinElmer, Inc.).

The crystal structure of the LiMO is a layered structure, and is preferably a hexagonal crystal structure or a monoclinic crystal structure.

[Method for Confirming Crystal Structure]

The crystal structure of the LiMO can be confirmed by observation using a powder X-ray diffraction measurement device (for example, an Ultima IV manufactured by Rigaku Corporation).

Hexagonal crystal structures belong to one space group selected from the group consisting of P3, $P3_1$, $P3_2$, R3, P-3, R-3, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm and $P6_3$/mmc.

Further, monoclinic crystal structures belong to one space group selected from the group consisting of P2, $P2_1$, C2, Pm, Pc, Cm, Cc, P2/m, $P2_1$/m, C2/m, P2/c, $P2_1$/c and C2/c.

Among these space groups, in order to obtain a lithium secondary battery having a high discharge capacity, the crystal structure is preferably a hexagonal crystal structure belonging to the space group R-3m, or a monoclinic crystal structure belonging to the space group C2/m.

<CAM>

The LiMO described above can be used favorably as a CAM.

<Lithium Secondary Battery>

One example of an ideal lithium secondary battery in the case where the above LiMO is used as the CAM has a cathode and an anode, a separator sandwiched between the cathode and the anode, and an electrolyte solution disposed between the cathode and the anode.

Moreover, another example of a lithium secondary battery has a cathode and an anode, a separator sandwiched between the cathode and the anode, and a solid electrolyte disposed between the cathode and the anode. This lithium secondary battery may employ the configurations, materials and production methods disclosed in paragraphs [0104] to [0181] of WO2022/113904A1.

[Examples]

The present invention is described below in further detail using a series of examples.

<Compositional Analyses>

Compositional analyses of the LiMO compounds and the lithium compounds were conducted by dissolving the LiMO or lithium compound in hydrochloric acid, and then conducting measurements using an ICP emission spectrophotometer (Optima 7300, manufactured by PerkinElmer, Inc.).

<Stirring Impeller Frequency Coefficient of Variation>

The coefficient of variation was measured in the manner described above in the section entitled [Method for Measuring Coefficient of Variation for Stirring Impeller Frequency].

<<Example 1>>

A reaction vessel fitted with a stirrer and an overflow pipe was charged with water, a sodium hydroxide aqueous solution was then added, and the liquid temperature (temperature of the reaction vessel) was held at 50°C.

A mixed raw material solution was prepared by mixing an aqueous solution of nickel sulfate, an aqueous solution of cobalt sulfate, and an aqueous solution of aluminum sulfate in amounts that yielded an atomic ratio between Ni, Co and Al of 0.88:0.09:0.03.

Subsequently, an aqueous solution of ammonium sulfate as a complexing agent was added continuously to the mixed raw material solution in the reaction vessel under constant stirring. An aqueous solution of sodium hydroxide was then added dropwise at a suitable time to adjust the pH of the mixed solution inside the reaction vessel to 11.6 (measurement temperature: 40°C), thus obtaining a reaction precipitate 1.

The precipitate 1 was washed, subsequently dewatered using a centrifuge, and then isolated and dried at 105°C, yielding a metal composite hydroxide 1 containing Ni, Co and Al.

The metal composite hydroxide 1 was heated and held in an air atmosphere at 650°C for 5 hours, and then cooled to room temperature to obtain a metal composite oxide MCC1.

Sufficient lithium hydroxide was weighed to provide a ratio (molar ratio) of the amount of Li relative to a value of 1 for the total amount of Ni, Co and Al contained in the MCC1 of 1.10. The MCC1 and the lithium hydroxide were then mixed using a mortar to obtain a mixture 1.

The proportion of Li contained in the lithium hydroxide that was used was 16.5% by mass.

This mixture 1 was introduced into a flow-type calcining furnace corresponding with the calcining apparatus 50 (product name: Desktop Rotary Kiln, manufactured by Noritake Company Limited). An oxygen-containing gas was supplied from the discharge port side under conditions that satisfied the relationship of formula (X), the oxygen-containing gas was brought into counterflow contact with the mixture 1 while being exhausted from an exhaust port corresponding with the exhaust port 55, and a preliminary calcining was conducted at 680°C for 2 hours, yielding a preliminary calcining product 1.

At this time, oxygen with a dew point of -23.6°C was supplied from the low-dew point gas supply section as the low-dew point gas with the value of formula (A) set to 0.20 ($Nm^3/kg$) and the value represented by formula (C) set to 0.67 ($Nm^3/kg$).

The coefficient of variation during the preliminary calcining was 0, confirming that the LiMO was able to be produced in a stable manner.

Subsequently, the obtained preliminary calcining product 1 was introduced into a static batch calcining furnace (product name: Oxidizing Atmosphere Furnace SKA-3050F-SP, manufactured by Motoyama Co., Ltd.), and a main calcining was conducted in an oxygen atmosphere by holding the temperature at 720°C for 5 hours, thus yielding a main calcining product 1.

The thus obtained main calcining product 1 was washed, subsequently dewatered using a centrifuge, and then isolated and dried under a nitrogen atmosphere at 250°C, yielding a LiMO-1.

Compositional analysis of the LiMO-1 revealed a product of the compositional formula (I) in which a=0.02, x=0.09, y=0.03, and the element M1 was Al.

<<Example 2>>

With the exception of altering the value of the formula (A) to 0.07 ($Nm^3$/kg), a preliminary calcining product 2 was obtained in the same manner as Example 1.

The coefficient of variation during the preliminary calcining was 0.034, confirming that the LiMO was able to be produced in a stable manner.

With the exception of using the preliminary calcining product 2, a LiMO-2 was obtained using the same method as Example 1.

Compositional analysis of the LiMO-2 revealed a product of the compositional formula (I) in which a=0.02, x=0.09, y=0.03, and the element M1 was Al.

<<Comparative Example 1>>

With the exceptions of not supplying the low-dew point gas, and altering the value represented by formula (C) to 1.72 ($Nm^3$/kg), a preliminary calcining product 11 was obtained using the same method as Example 1.

The coefficient of variation during the preliminary calcining was 0.058. The value of the coefficient of variation was large, increasing the risk of blockages if operations were continued, and therefore the preliminary calcining was halted partway through.

<<Comparative Example 2>>

With the exceptions of not supplying the low-dew point gas, and altering the value represented by formula (C) to 0.10 ($Nm^3$/kg), a preliminary calcining product 12 was obtained using the same method as Example 1.

The coefficient of variation during the preliminary calcining was 0.040. The value of the coefficient of variation was large, increasing the risk of blockages if operations were continued, and therefore the preliminary calcining was halted partway through.

As indicated by the above results, it was confirmed that in a counterflow contact-type calcining method, when a low-dew point gas having a dew point of 10°C or lower is supplied from the upstream side of the heating device and calcining is conducted under conditions that satisfy formula (A), blockages caused by condensation in the vicinity of the raw material supply section are unlikely to occur, and a LiMO can be produced in a stable manner.

[Reference Signs List]

    50: Calcining apparatus
    51: Input section
    52: Kiln main body
    53: Discharge port
    54: Heating device
    55: Exhaust port
    56: Low dew-point gas supply section
    58: Transport section
    581: Transport mechanism
    582: Electric motor
    60: Gas supply device
    601: Oxygen-containing gas supply section
    602: Low-dew point gas supply line
    61: Control section

**Claims**

1. A method for producing a lithium metal composite oxide that comprises a step of calcining an object to be treated using a calcining apparatus to obtain a fired product, wherein

   the object to be treated contains a mixture of a metal composite compound and a lithium compound,
   the calcining apparatus comprises an input section into which the object to be treated is introduced, a transport section for transporting the object to be treated that has been introduced from the input section, a cylindrical kiln main body, a discharge port through which the fired product is discharged, and a gas supply device,
   the kiln main body comprises a heating device, and
   in the step,
   a low-dew point gas having a dew point of 10°C or lower is supplied from a position upstream from the heating device,
   an oxygen-containing gas is supplied from a position downstream from the heating device,
   the object to be treated is fired under counterflow contact with the oxygen-containing gas, and
   a value represented by formula (A) shown below is at least 0.0001 $Nm^3/kg$ but not more than 0.30 $Nm^3/kg$.

   Supply amount of low-dew point gas ($Nm^3$/hour) / supply amount of object to be treated (kg/hour)　　　Formula (A):

2. The method for producing a lithium metal composite oxide according to Claim 1, wherein the calcining apparatus is a rotary kiln.

3. The method for producing a lithium metal composite oxide according to Claim 1 or 2, wherein a proportion of Li contained in the lithium compound is at least 5% by mass but not more than 50% by mass.

4. The method for producing a lithium metal composite oxide according to Claim 3, wherein the proportion of Li is at least 5% by mass but not more than 30% by mass.

5. The method for producing a lithium metal composite oxide according to Claim 1 or 2, wherein a value represented by formula (C) shown below is at least 0.3 $Nm^3/kg$ but not more than 1 $Nm^3/kg$.

   Supply amount of oxygen-containing gas ($Nm^3$/hour) / supply amount of object to be treated (kg/hour)　　　Formula (C):

6. The method for producing a lithium metal composite oxide according to Claim 1 or 2, wherein the calcining apparatus comprises an exhaust port upstream from the heating device, and in the step, calcining is conducted while the oxygen-containing gas inside the calcining apparatus is exhausted from the exhaust port.

7. The method for producing a lithium metal composite oxide according to Claim 1 or 2, wherein the lithium metal composite oxide is represented by a compositional formula (I) shown below:

   $$Li[Li_a(Ni_{(1-x-y)}Co_xM1_y)_{1-a}]O_2 \ ... \qquad \text{compositional formula (I)}$$

   (wherein in the compositional formula (I), M1 represents at least one element selected from the group consisting of Mn, Fe, Cu, Ti, Mg, Ca, Al, Zn, W, Nb, Sn, Zr, B, Si, S and P, and the compositional formula (I) satisfies $-0.1 \leq a \leq 0.2$, $0 \leq x \leq 0.7$, $0 < y \leq 0.7$, and $x+y < 1$).

FIG. 1

## INTERNATIONAL SEARCH REPORT

| International application No. |
| --- |
| **PCT/JP2024/014185** |

**A.    CLASSIFICATION OF SUBJECT MATTER**

*C01G 53/00*(2006.01)i; *H01M 4/505*(2010.01)i; *H01M 4/525*(2010.01)i
FI:    C01G53/00 A; H01M4/505; H01M4/525

According to International Patent Classification (IPC) or to both national classification and IPC

**B.    FIELDS SEARCHED**

Minimum documentation searched (classification system followed by classification symbols)

C01D15/00-15/10; C01G53/00-53/12; F27B7/00-7/42; H01M4/00-4/98

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-172419 A (SUMITOMO CHEMICAL CO., LTD.) 22 October 2020 (2020-10-22) | 1-7 |
| A | JP 2019-075253 A (HITACHI METALS, LTD.) 16 May 2019 (2019-05-16) | 1-7 |
| A | WO 2019/054296 A1 (SUMITOMO CHEMICAL CO., LTD.) 21 March 2019 (2019-03-21) | 1-7 |
| A | JP 2014-001110 A (TAIYO YUDEN CO., LTD.) 09 January 2014 (2014-01-09) | 1-7 |

☐ Further documents are listed in the continuation of Box C.          ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **06 June 2024** | **25 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/014185**

| Patent document cited in search report | | | Publication date (day/month/year) | Patent family member(s) | | | Publication date (day/month/year) |
|---|---|---|---|---|---|---|---|
| JP | 2020-172419 | A | 22 October 2020 | US | 2022/0149365 | A1 | |
| | | | | EP | 3954657 | A1 | |
| | | | | CN | 113677628 | A | |
| | | | | KR | 10-2021-0151087 | A | |
| JP | 2019-075253 | A | 16 May 2019 | (Family: none) | | | |
| WO | 2019/054296 | A1 | 21 March 2019 | EP | 3683869 | A1 | |
| | | | | CN | 111095620 | A | |
| | | | | KR | 10-2020-0054190 | A | |
| JP | 2014-001110 | A | 09 January 2014 | US | 2013/0343983 | A1 | |
| | | | | CN | 103515588 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023067067 A
- JP 2019075253 A
- JP 2002201028 A
- WO 2022113904 A1